Europäisches Patentamt

European Patent Office

Office européen des brevets

(11) Veröffentlichungsnummer: **0 154 325**
**A2**

(12) **EUROPÄISCHE PATENTANMELDUNG**

(21) Anmeldenummer: 85102453.9

(22) Anmeldetag: 05.03.85

(51) Int. Cl.⁴: **E 04 B 1/80**
F 24 D 3/00

(30) Priorität: 06.03.84 CH 1100/84

(43) Veröffentlichungstag der Anmeldung:
11.09.85 Patentblatt 85/37

(84) Benannte Vertragsstaaten:
AT BE DE FR GB IT NL SE

(71) Anmelder: FENNESZ, Manfred
Damböckgasse 4
A-1060 Wien(AT)

(72) Erfinder: FENNESZ, Manfred
Damböckgasse 4
A-1060 Wien(AT)

(74) Vertreter: Büchel, Kurt F., Dr. et al,
Austrasse 4
FL-9490 Vaduz(LI)

(54) Isolierplatte für die Verlegung eines Stranges einer Flächen-Temperiereinrichtung.

(57) Für die Verlegung eines Stranges (5) einer Temperiereinrichtung, d.h. also einer Heiz- und/oder Kühleinrichtung, weist eine Isolierplattenordnung eine Basisplatte (9) auf, auf der noppenförmige Erhebungen (1) entweder angeformt oder aufgesteckt sind. Wenigstens ein Teil dieser Erhebungen (1) sind paarweise durch relativ zu ihnen verschmälerte Stege (2) verbunden, die in mindestens der halben Höhe verlaufen wie dei Erhebungen (1), wobei die Stege Halteöffnungen (4) zur Aufnahme wenigstens eines Stranges (5) aufweisen.

Fig. 1

EP 0 154 325 A2

Die Erfindung betrifft eine Isolierplatte für die Verlegung eines Stranges einer Flächen-Temperiereinrichtung, mit noppenartigen Erhebungen, zwischen denen der Strang verläuft. Solche Platten sind - insbesondere für Fussbodenheizungen - bekannt geworden, bei denen ein elektrisches Kabel oder ein einen flüssigen Wärmeträger aufnehmender Schlauch, bzw. flexibles Rohr schlangen- oder mäanderförmig zwischen den Erhebungen verlegt wird. Ueber diese Konstruktion von Isolierplatten und Heiz- bzw. Kühlsträngen wird dann entweder ein Betonestrich gegossen, der die Stränge ummantelt und die Zwischenräume zwischen den Erhebungen an denjenigen Stellen erfüllt, an denen kein Strang verlegt ist; oder es werden auf die Konstruktion im sogenannten Trockenaufbau Fussbodenplatten, wie z.B. ein Klebeparkett verlegt. In beiden Fällen können die Stränge mit Wärmeleitblechen versehen sein, damit die Wärme bzw. Kälte auch in die Zonen zwischen den Strängen besser verteilt wird.

Nun hat man bereits vorgeschlagen, die Stränge in an der Oberseite der Erhebungen angeordnete Ausschnitte (DE-GM 8237053), oder auf zwischen den Erhebungen angeordnete niedrige Stege (DE-OS 3109817) zu verlegen, um eine vollständige Ummantelung der Stränge mit Betonestrich auch an ihrer Unterseite zu ermöglichen und damit den Wärmeübergang zwischen Strang und Fussboden zu verbessern. Im ersten Fall ist allerdings über die ganze Breite der Erhebung eine Ummantelung des Stranges unterbunden; im zweiten Fall ist eine Fixierung der Stränge bei der Verlegung nur durch Hinterschneidung der Seitenflächen der Erhebungen möglich, was die Herstellung der Platten wegen der Notwendigkeit komplizierter Formen sehr verteuert.

Der Erfindung liegt die Aufgabe zugrunde, eine Platte der eingangs genannten Art zu schaffen, die aus einer verhältnismässig einfachen Form herzustellen ist, die Fixierung
der Stränge bei ihrer Verlegung ermöglicht, sowie wenigstens einen Teil der Stränge im Abstand von der Isolierplatte hält und damit deren so gut wie vollständige Ummantelung mit Luft, Betonestrich oder dgl. ermöglicht.

Dies erfolgt erfindungsgemäss dadurch, dass von wenigstens
einem Teil der Erhebungen jeweils zwei mittels verschmälerter Strangaufnahmen verbunden sind, die in mindestens
der halben Höhe verlaufen wie die Erhebungen, und dass an
der Oberseite der Strangaufnahmen wenigstens eine Halteöffnung für die Aufnahme wenigstens eines Stranges gebildet ist. Die Strangaufnahmen können von zwischen den Erhebungen verlaufenden, gegebenenfalls in Schlitze der Erhebung einsetzbaren, Stegen gebildet sein, doch wird aus der
späteren Beschreibung ersichtlich, dass auch Gitterkonstruktionen, allenfalls jeweils unter Hinzusetzen von
Klammern, Klipsen oder dgl. vorgesehen sein können. Dabei
kann auch das Gitter, z.B. ein Baustahlgitter, in Schlitze
der Erhebungen einsetzbar sein, so dass einer solchen Ausbildung - selbst unabhängig von der Anordnung von Strangaufnahmen - besondere Bedeutung zukommt. Zweckmässig ist
es, wenn die Halteöffnungen in Richtung des Strangverlaufes geringfügig, z.B. im Zick-Zack, gegeneinander versetzt
sind, weil dann der Strang einen besseren Klemmsitz
erhält.

In jedem Falle sind die Stege bzw. das Gitter gegenüber
der Breite der Erhebungen verschmälert, wobei die Erhebungen auf diese Weise nicht nur eine Funktion als Abstandhalter zur Oberkonstruktion (Estrich od. dgl.) erfüllen,
sondern auch der seitlichen Verankerung der Strangaufnahmen dienen und so die Konstruktion stabiler gestalten. Dabei wird der Wärmeübergang verbessert, wenn die Erhebungen
im Querschnitt gesehen kuppenartig abgerundet und nur von
Fuss zu Fuss durch Stege verbunden sind, die vorzugsweise ebenfalls - im Längsschnitt gesehen - kuppenartig abgerundet sind. Ein nicht zu unterschätzender Vorteil der gegebenenfalls mit Kuppen versehenen Erhebungen liegt darin, dass sie einen grösseren Teil des Betonestrichs verdrängen und so auf die Flächeneinheit gesehen Gewicht sparen.

Bei grösserem Abstand der Erhebungen voneinander kann jeder Steg auch zwei oder mehr Ausschnitte aufweisen, damit mehrere Stränge nebeneinander verlegt werden können. Die Erhebungen können in an sich bekannter Weise - senkrecht auf die Fläche gesehen - rund, länglich, polygonal oder sternförmig sein, wobei in den letzten beiden Fällen jede Ecke bzw. jeder Strahl gleich in einen Steg ausläuft. Insbesondere wenn die Erhebungen länglich sind, können je zwei Längsseiten auch durch mehr als einen Steg verbunden sein.

Die Höhe der Strangaufnahmen kann um mindestens 20% grösser als der Strangdurchmesser, höchstens aber etwas mehr als doppelt so gross wie der Durchmesser des Stranges sein, z.B. um 3 bis 8 mm grösser als der doppelte Strangdurchmesser. Durch diese Ausbildung wird die Ummantelung des Stranges erleichtert und/oder die Ueberkreuzung zweier Stränge ermöglicht.

Besonders zwckmässig ist es, wenn die zum Raum weisende Oberfläche der Platte und der Erhebungen, zweckmässig auch der Strangaufnahmen, gegebenenfalls einschliesslich der verbindenden Seitenwände, von einem - vorzugsweise 0,1 bis 1,0 mm starken - Wärmeleitlack bzw. -blech bedeckt sind.

Die Halteöffnungen sind im allgemeinen von Ausschnitten aus den Stegen, von Krümmungen des Gitterdrahtes oder ösenartigen Anschweissungen, gegebenenfalls aber auch von den Aufnahmeöffnungen, von Klammern od. dgl. gebildet. Hiebei ist es zweckmässig, wenn diese Halteöffnungen ge-

0154325

ringfügig enger als der Durchmesser des Stranges und/oder hinterschnitten sind.

Im Sinne dieser Erfindung soll der Begriff "Durchmesser" in einem allgemeinen Sinne, etwa im Sinne von "Querschnittsdimension in einer Richtung" verstanden werden, so dass auch Stränge, Aufnahmeöffnungen od. dgl. mit einer vom Kreisquerschnitt abweichenden Querschnittsform mit erfasst sind. Die Halteöffnungen können zur Fixierung auch mit Klemmteilen aus Kunststoff versehen bzw. ausgekleidet sein und/oder an ihrer inneren Oberfläche Auflagenoppen oder -rippen aufweisen, zwischen denen Vertiefungen für die Umantelung des Stranges auch in der Zone der Strangaufnahmen vorgesehen sind.

Die Erfindung wird nachstehend an Hand von in der Zeichnung schematisch dargestellten Ausführungsbeispielen näher erläutert. Es zeigen:

Fig.  1  eine Draufsicht auf eine erste Ausführungsform einer erfindungsgemässen Isolierplatte, zu der

Fig.  2A einen Schnitt nach der Linie II-II veranschaulicht, wogegen die

Fig.  2B bis 2F Ausführungsvarianten zum Querschnitt nach Fig. 2A darstellen;

Fig.  3  einen Schnitt nach Linie III-III der Fig. 1;

Fig.  4  eine andere Ausführungsform mit sternförmigen Erhebungen in Draufsicht, die in zwei verschiedenen Modifikationen gezeigt sind;

Fig.  5  und 6 Querschnitte nach den Linien V-V bzw. VI-VI der Fig. 4;

0154325

die Fig. 7A bis 7C weitere Ausführungsvarianten, und zwar

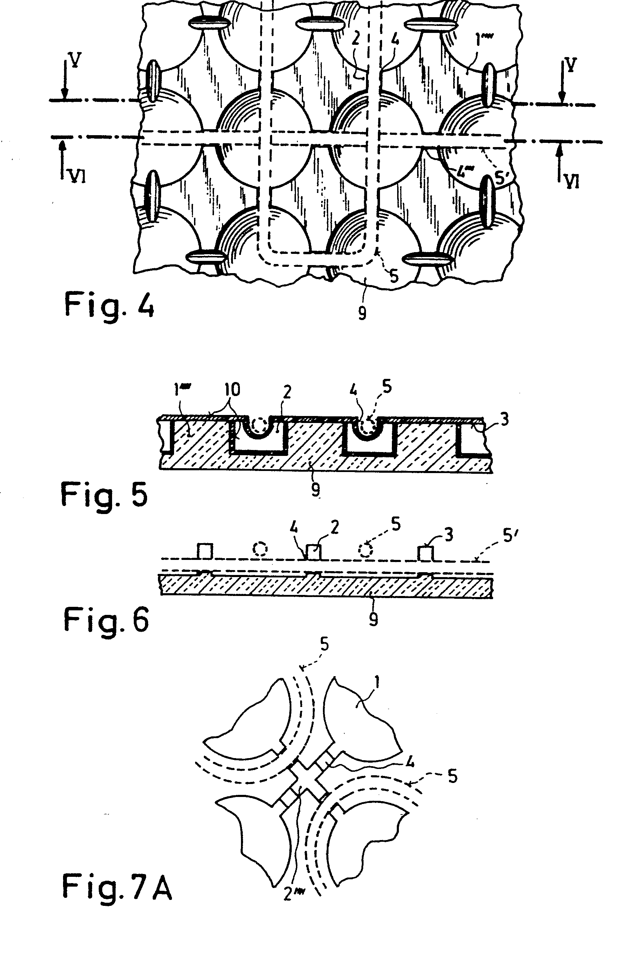

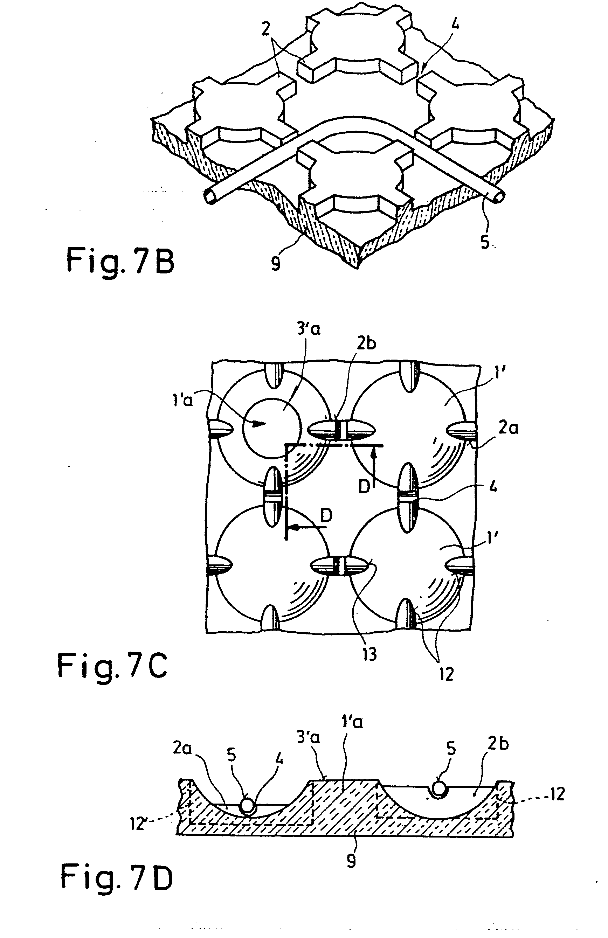

die Fig. 7A und 7C in Draufsicht, die Fig. 7B in
Perspektive, während die

Fig. 7D einen Schnitt nach der Linie D-D der Fig. 7C veranschaulicht;

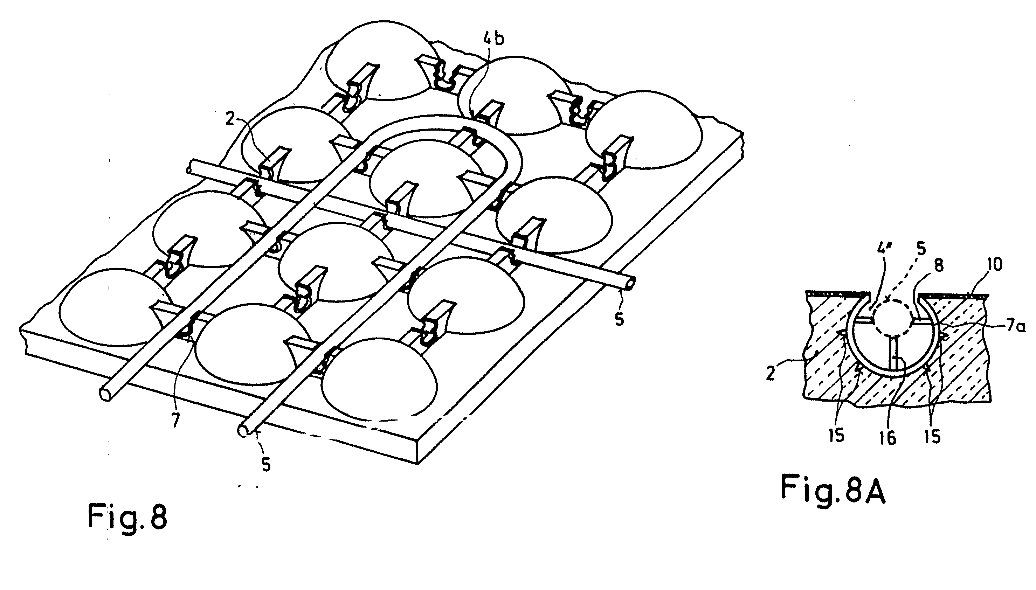

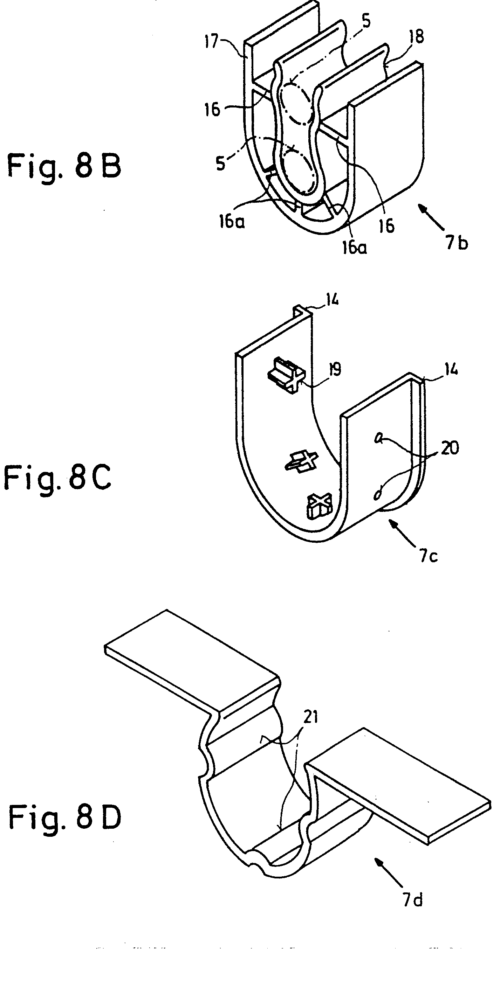

Fig. 8 eine axonometrische Ansicht einer Ausführung unter Verwendung von Klemmeinrichtungen, von denen
die

Fig. 8A und 8B verschiedene Ausführungsformen zeigen;

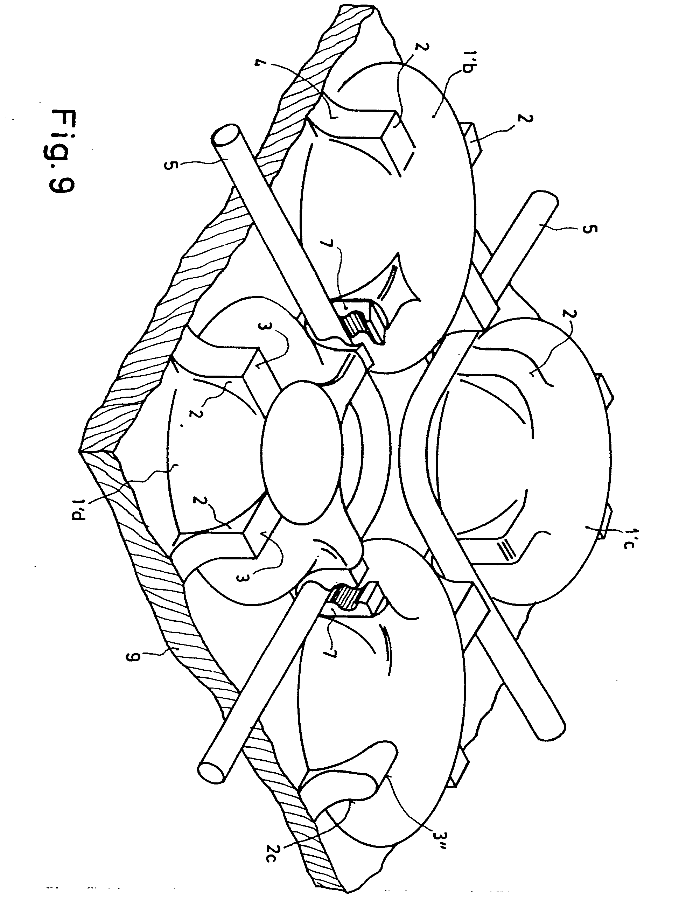

Fig. 9 eine axonometrische Darstellung einer weiteren
Ausführungsform mit verschiedenen Ausbildungen
der Erhebungen;

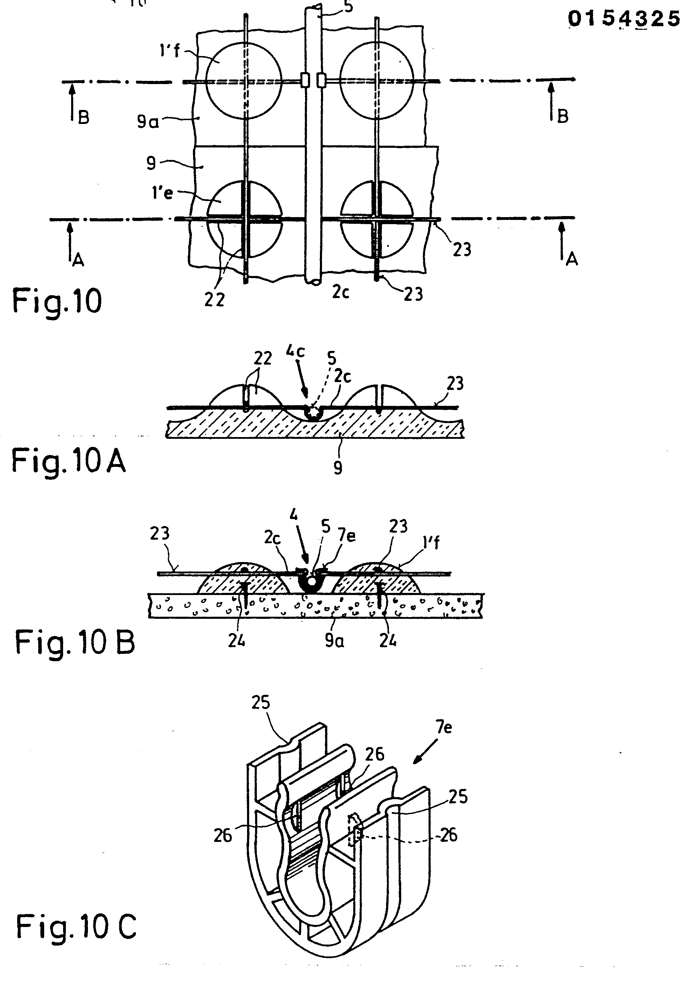

Fig. 10 eine Draufsicht auf eine Ausführung unter Verwendung einer Gitterkonstruktion in zwei verschiedenen Modifikationen, von denen in den

Fig. 10A und 10B Schnitte nach den Linien A-A bzw. B-B der
Fig. 10 dargestellt sind, während

Fig. 10C die gemäss Fig. 10B verwendete Klemmeinrichtung
vergrössert in axonometrischer Darstellung veranschaulicht;

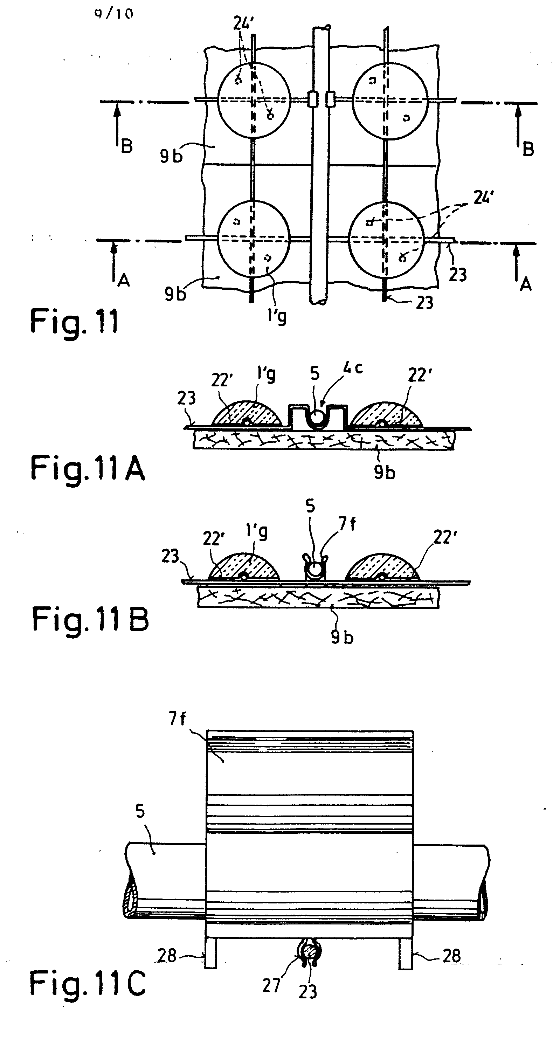

Fig. 11 eine Variante zu Fig. 10, wieder in zwei Modifikationen, von denen die

Fig. 11A und 11B jeweils die Querschnitte nach den Linien
A-A bzw. B-B der Fig. 11 veranschaulichen, und
die

Fig. 11C eine Seitenansicht der gemäss Fig. 11B verwendeten Klemmeinrichtung in vergrössertem Masstabe
    ist; und schliesslich die

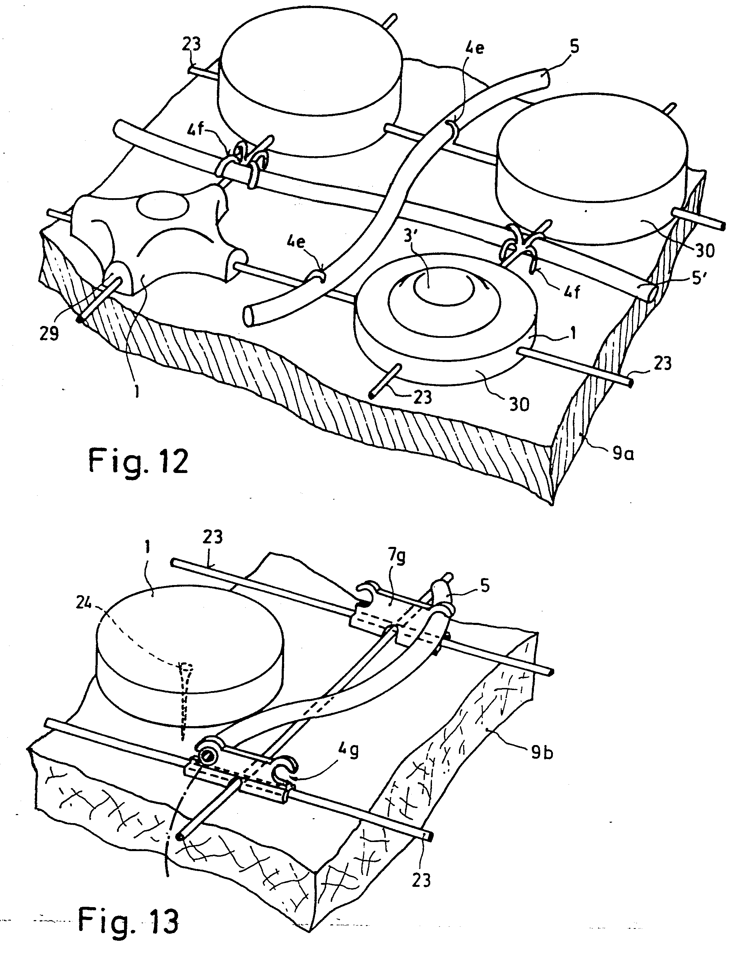

Fig. 12    und 13 die axonometrische Darstellung weiterer
    Ausführungsbeispiele.

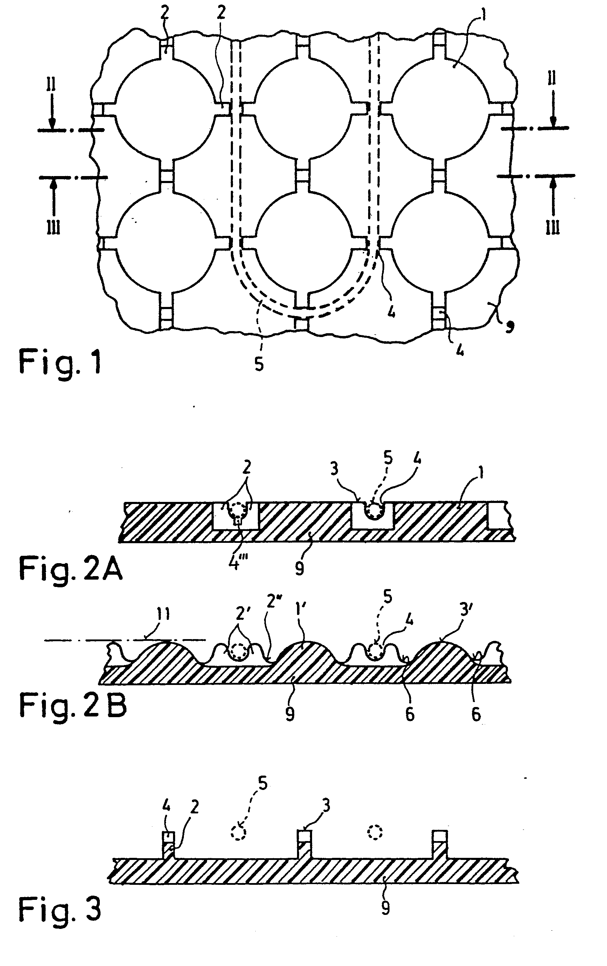

Auf einer Basisplatte 9 sind noppenartige Erhebungen 1 mit
- von oben gesehen - kreisförmigem Querschnitt im Abstand
voneinander angeordnet bzw. gemäss Fig. 2A angeformt. Wie
Fig. 2A dabei deutlich zeigt, sind die noppenartigen Erhebungen 1 paarweise durch etwa gleich hohe Stege 2 untereinander verbunden, die ebenfalls mit den Erhebungen 1 und
der Basisplatte 9 in einem Formvorgang hergestellt worden
sind. Die Stege 2 besitzen an ihrer Oberkante 3 Halteöffnungen 4 in Form von Ausnehmungen zum Einlegen von Strängen 5 einer Temperiereinrichtung zur Beheizung und/oder
Kühlung einer Wandungsfläche eines Raumes.

Die linke Halteöffnung 4 in Fig. 2A zeigt übrigens an ihrem Grund eine Vertiefung 4'", die einerseits dazu dient,
den Strang 5 auch im Bereich seiner Auflage noch wenigstens teilweise mit Beton oder Luft ummanteln zu können,
andererseits dazu dienen kann, bei grossflächigen Fussboden-Temperiereinrichtungen, bei denen in die Betonschichte
in bestimmten Abständen Trennstreifen einzulegen sind,
diese Trennstreifen (anstelle der Stränge) zu fixieren.
Beim Strang 5 kann es sich um eine beliebige Temperiereinrichtung, beispielsweise um eine Rohrleitung für den Transport eines Heiz- und/ oder Kühlmediums, wie Luft oder Wasser, oder auch um eine elektrische Heizung handeln.

In jedem Falle wird der Strang 5 nach dem Einlegen in die als Strangaufnahmen fungierenden Stege 2 mit den Halteöffnungen 4 im wesentlichen unverrückbar fixiert, wodurch es auch erleichtert wird, Krümmungen - wie aus Fig. 1 ersichtlich - des Stranges 5 herzustellen, etwa wenn dieser schlangenförmig über einen Fussboden verlegt werden soll. Deshalb ist es günstig, wenn die Oberkante 3 im Bereiche der jeweiligen Ausnehmung einen so engen Radius durchläuft, dass der eingelegte Strang 5 mit Pressitz fest umschlungen wird. Unter Berücksichtigung der Eigenelastizität des die Stege 2 bildenden Materials, z.B. Kunststoff, wie Polyurethan, bedeutet dies, dass die Halteöffnungen 4 geringfügig enger sind als der Durchmesser des Stranges 5. Dabei können die Ausnehmungen 4 in der dargestellten Weise im wesentlichen U-förmig sein, oder - wie aus Fig. 8A ersichtlich - etwas hinterschnitten, um den Strang 5 mit Schnappsitz aufzunehmen.

Auf diese Weise ist der Strang 5 in den Halteöffnungen 4 im wesentlichen unbeweglich gehalten, wobei alle Zugkräfte, die im Verlaufe der Montage oder auch auf Grund von Wärmedehnungen auftreten, von den Stegen 2 übernommen werden. Deshalb ist deren Verankerung an den Erhebungen 1 ein besonderer Vorteil, zumal auf diese Weise die Stege 2 auch schmäler ausgebildet sein können, was sich nicht nur in einer Materialersparnis auswirkt, sondern überdies den Wärmeübergang von Strang 5 auf eine Ummantelung (nach Ausgiessen des von der Platte 9 mit den Erhebungen 1 gebildeten Profiles) verbessert, weil das Isoliermaterial, aus dem die Stege im allgemeinen bestehen, nur einen geringen Flächenabschnitt der Stränge abdeckt.

Die Oberkante 3 kann entsprechend Fig. 2A parallel zur Unterkante der Basisplatte 9 verlaufen oder auch gemäss Fig. 2B mit Kuppen 2' versehen sein. Diese Ausbildung hat den Vorteil, dass dadurch die Elastizität der Klemmung des Stranges 5 im Ausschnitt 4 verbessert wird, wobei sich sogar noch eine gewisse Materialersparnis ergibt. Wird das Plattenprofil nicht ausgegossen, so ergeben sich durch die Stegtäler 2" am Fusse 6 der Erhebungen 1' unter einer strichpunktiert angedeuteten Wandabdeckung 11 Luftkanäle, die parallel zum Strang 5 verlaufen und für eine Wärmeverteilung sorgen. Da gleichzeitig die Oberfläche der Erhebungen 1' in Form von Kuppen 3' ausgebildet ist, wird infolge grösseren Wärmeleitvolumens der Wärmeübergang von den Strängen 5 auf die zwischen den Strängen 5 gelegenen Zonen verbessert. Besonders aus Fig. 3 ist deutlich ersichtlich, wie die Stränge 5 im Abstand von der Oberseite der durchgehenden oder in einzelnen Stücken verlegten Basisplatte 0 geführt und von der Luft umspült oder beim Vergiessen mit Betonestrich ummantelt werden können.

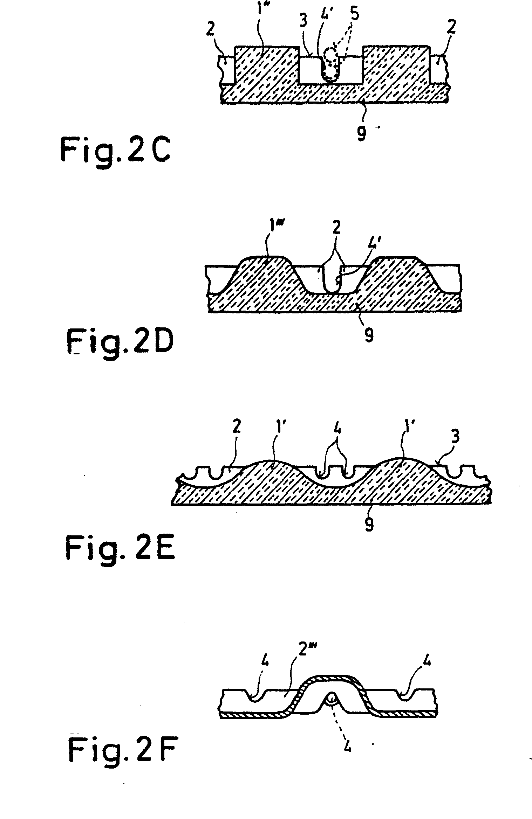

Es ist aber keineswegs erforderlich, die Erhebungen
in der Art der Fig. 2B kuppenförmig auszubilden, insbesondere wenn die Temperiereinrichtung als Fussbodenheizung od. dgl. bei Böden ausgebildet werden soll, auf
denen eine grössere Belastung zu erwarten ist. Für
solche Anwendungen bieten nämlich die Kuppen 3' nur eine
kleine Auflagefläche, weshalb die Ausführung nach
Fig. 2B besonders für unbelastete Wandflächen von
Vorteil ist, insbesondere also für Seitenwände oder
Decken. Für Fussböden mit grösserer Belastung eignet
sich beispielsweise besonders eine Querschnittsform
gemäss Fig. 2C, bei der die Erhebungen 1" eine verhältnismässig grosse Auflagefläche an ihrer Oberseite
bieten. Falls ein Vergiessen nicht beabsichtigt ist,
brauchen auch hier die Oberkanten 3 der Stege 2 nicht
bis zur vollen Höhe der Erhebungen 1" geführt sein, um
einen Raum für Luftströmungen frei zu lassen. Falls
hingegen vergossen werden soll, können die Stege 2 auch
bis zur Höhe der Erhebungen 1" reichen, um den Fussbodenbelag zusätzlich zu unterstützen. Dabei kann der
Ausschnitt 4' so tief gewählt sein, dass gewünschtenfalls zwei Stränge übereinander angeordnet werden
können.

Gegenüber der Ausführung nach Fig. 2C besitzt diejenige
nach Fig. 2B allerdings den Vorteil, bei der Herstellung
leichter entformbar zu sein. Um nun auch auf diesen Vorteil nicht verzichten zu müssen, kann eine Querschnittsform gemäss Fig. 2D gewählt werden, bei der die Erhebungen 1'" im Querschnitt etwa trapezförmig sich über

die Basisplatte 9 erheben. Auch hier ist wieder ein tiefer Ausschnitt 4' zur Aufnahme zweier Stränge übereinander vorgesehen.

Falls ein einziger Strang zwischen zwei Erhebungen nicht ausreichend ist, bedeutet aber die Verlegung zweier Stränge 5 übereinander, etwa in der Art der Fig. 2C oder 2D, dass der Aufbau in der betreffenden Wand verhältnismässig hoch wird. Will man dagegen eine flachere Ausbildung, so kann eine Ausführung gemäss Fig. 2E gewählt werden, bei der zwischen - beispielsweise kuppenförmigen - Erhebungen 1' Stege 2' mit je zwei (oder mehr) Halteöffnungen 4 nebeneinander vorgesehen sind, wobei diese Halteöffnungen 4 im Vergleich zu den Ausschnitten 4' der vorherigen Figuren weniger tief sind, weil sie ja nur je einen einzigen Strang aufzunehmen haben.

Wenn oben auch Polyurethan, z.B. Hartschaum, als Material für die Platten 9 erwähnt wurde, so können, besonders für Fussböden auch andere Materialien Verwendung finden, beispielsweise herkömmliche Baustoffe. Dabei ist jedoch in Rechnung zu stellen, dass solche Baustoffe meist ein höheres Gewicht besitzen, was die Handhabung und den Transport erschwert. Will man anderseits besonders leichte Platten herstellen, beispielsweise für die Temperierung von Seitenwänden, so kann auch ein Hohlprofil verwendet werden, wie es aus Fig. 2F ersichtlich ist. Ein solches Hohlprofil mit im Querschnitt etwa dreieckigen (mit abgerundeter Spitze) Stegen 2'" kann sowohl aus Kunststoff durch Giessen, als auch aus Blech durch Tiefziehen relativ leicht hergestellt werden, wobei die Profilübergänge, besonders an den Halteöffnungen 4, vor allem bei Herstellung durch Tiefziehen, abgerundet sein sollen.

Fig. 4 zeigt eine Ausführung, bei der die Erhebungen 1"" in Draufsicht sternförmig ausgebildet sind, wobei die vier Strahlen in Stege 2 auslaufen, in denen Halteöffnungen 4 in Form von Ausschnitten angeordnet sind. Falls dabei die Erhebungen 1"" in der in Fig.5 gezeigten Weise entsprechend der oberen Hälfte der Fig. 4 im Querschnitt rechteckförmig sind, ergibt sich eine scharfe Begrenzung der Ausschnitte 4 (vgl. auch Fig. 6); ist dagegen entsprechend der unteren Hälfte der Fig. 4 ein etwa wellenförmiges Profil in der Art der Fig. 2E vorgesehen, so ergeben sich geometrische Verschneidungen 4" mit den sich wellenförmig absenkenden Tälern.

Wie ein Vergleich der Fig. 5 und 6 zeigt, sind die Halteöffnungen 4'", die in Querrichtung (bezogen auf Fig. 4 und 6) verlaufen und einen Strang 5' aufnehmen, etwa doppelt so tief, als die Halteöffnungen 4 zur Aufnahme des im wesentlichen in Längsrichtung verlaufenden Stranges 5. Auf diese Weise ist es möglich, einander kreuzende Stränge, ohne sie zu verbiegen, vorzusehen.

Eine weitere Möglichkeit wird später an Hand der Fig. 7D beschrieben.

Um die Wärme möglichst rasch und gleichmässig zu verteilen, kann die Oberfläche der Basisplatte 9 und der Erhebungen 1"" mit einem Wärmeleitlack 10 (Fig. 5) überzogen sein, insbesondere um die Wärme aus den Tälern, d.h. von der Oberfläche der Basisplatte 9 zu den höchsten Punkten der Erhebungen 1"" zu leiten. Wird nämlich das gesamte Profil 1"", 9 mit Betonestrich ausgegossen, so liegt in den Tälern eine grössere Menge an Beton mit entsprechend grösserer Wärmespeicherkapazität während auf den Erhebungen 1"" nur mehr eine dünne Betonschicht liegt und daher die Wärme rascher abgegeben wird. Es können aber auch Streifen aus Wärmeleitblech 10 (in Fig. 5 im Längsschnitt) gitterartig über die Erhebungen 1,4 verlaufen und dazwischen Nuten 4 formen, die die Stränge 5 aufnehmen, bzw. wärmeleitend ummanteln.

Die sternförmige Ausbildung gemäss Fig. 4 ist nicht zuletzt deshalb bevorzugt, weil sie besser dem Kräfteverlauf entspricht, der sich bei Zugbeanspruchungen an den Stegen 2 bzw. den Armen des Sternes ergibt. Die zunehmende Verdickung der Stege 2 gegen die Erhöhung 1"" entspricht einer zunehmenden Versteifung, wobei auch die Gefahr von Brüchen während des rauhen Montagebetriebes geringer ist.

Fig. 7 zeigt eine Ausbildung, bei der je zwei Stege 2"" einander kreuzen. Jedem Steg 2"" sind zwei Halteöffnungen 4 zugeordnet, was im Bereiche von Krümmungen von Strängen 5 von Vorteil ist, wobei man leicht auch die jeweilige Erhebung 1 als Schablone für die Krümmung des Stranges 5 benützen kann.

Für eine flache Bauweise kann es erwünscht sein, die Halteöffnungen 4 durchgehend bis zur Oberfläche der Basisplatte 9 auszubilden, so dass die Stege 2 in der aus Fig. 7B ersichtlichen Weise unterbrochen erscheinen. Bei einer solchen Ausbildung liegt allerdings der Strang 5 an der Oberfläche der Basisplatte 9 auf und wird daher nicht allseitig von Luft umspült bzw. von Betonestrich ummantelt.

An Hand der Fig. 2A bis 2F wurden die Vorteile unterschiedlicher Stegausbildungen für verschiedene Anwendungsfälle besprochen. Um nicht zu viele verschiedenartige Isolierplatten auf Lager halten zu müssen und

0154325

und dennoch den jeweils günstigsten Steg zur Verfügung
zu haben, können die Erhebungen 1' Auschnitte 12 besitzen, in die die jeweils günstigsten Stege einsetzbar
sind. Die Ausschnitte 12 können in der aus Fig. 7C
ersichtlichen Weise so eng bemessen sein, dass die Stege
2a, 2b mit Passitz einsetzbar sind, es kann jedoch die
Ausbildung auch so getroffen sein, dass die Stege innerhalb der Ausschnitte 12 eine gewisse seitliche Bewegungsfreiheit besitzen und so um den tiefsten Punkt 13
der Ausschnitte 12 um ein gewisses Mass schwenkbar sind.
Diese Schwenkung kann unter Verformung bzw. Biegung der
Stege 2a, 2b erfolgen; bei einer Flachbauweise gemäss
Fig. 7B mit bis zur Plattenoberfläche verlaufenden
Halteöffnungen 4 sind jedoch die Stege 2a, 2b zweiteilig
ausgebildet, wobei jede Verschwenkung ein stärkeres Festklemmen des Stranges bewirkt.

Die in Fig. 7C dargestellten Erhebungen sind kuppenförmige Erhebungen 1', wie sie im Querschnitt beispielsweise aus Fig. 2B oder 2E ersichtlich sind. Dies
bedeutet, dass die eingesetzten Stege 2a, 2b am Grunde,
d.h. gegen die Basisplatte 9 zu, von den Ausschnitten 12
der Erhebungen 1' stärker umfasst werden, als an der
Oberseite. Zwar kann sich eine gewisse Verbesserung
dadurch ergeben, dass die Oberseite der Kuppe als ebene
Fäche 3'a ausgebildet wird (vgl. Fig. 7D), wodurch auch
der Flächendruck ( etwa bei einer Fussbodentemperierung)
besser verteilt wird. Eine weitere Möglichkeit zur
gleichmässigen Verankerung der Stege 2a, 2b an den
Ausschnitten 12 kann auch darin gelegen sein, dass die Erhebungen bis zur Höhe der Stege zylinderförmig ausgebildet sind, welche Zylinder von entsprechenden Kuppen gekrönt sind.

Die Fig. 7D zeigt vor allem die zueinander im rechten Winkel liegenden Stege 2a, 2b der Fig. 7C. Um das Ueberkreuzen zweier Stränge 5 zu erleichtern, können die Stege 2a, 2b in der dargestellten Weise unterschiedlich hoch sein, wobei der Höhenunterschied annähernd dem Durchmesser eines Stranges 5 entspricht. Gegebenenfalls kann der Höhenunterschied auch etwas grösser sein, wenn die Stränge 5 auch an der Kreuzungsstelle allseitig von Betonestrich ummantelt sein sollen. Auf diese Bemassung ist auch bei Ausbildungen nach Fig. 2C und 2D, bzw. nach Fig. 5 und 6 Rücksicht zu nehmen, so dass die Stege unter Umständen etwas mehr als die doppelte Höhe eines Strangdurchmessers erreichen. Für die Ummantelung im Kreuzungsbereich werden jedoch im allgemeinen etwa 3 mm bis 8 mm ausreichend sein, und es kann im Durchschnitt mit etwa einem halben Zentimeter gerechnet werden.

Die Ausnehmungen 12 brauchen, wie rechts in Fig. 7D angedeutet, nicht bis in die Basisplatte 9 reichen, doch ist auch eine solch tiefe Schlitzausbildung möglich, wie dies links an Hand der Ausnehmung 12' gezeigt ist. Es ist dabei in der aus Fig. 7C ersichtlichen Weise vorteilhaft, wenn die seitlichen Stegenden gegen den Grund 13 der Ausnehmungen 12 zu etwas zugespitzt sind, um so Toleranzen leichter auszugleichen. Jedenfalls brauchen aber bei einer solchen Konstruktion nur dort Stege eingesetzt werden, wo sie für einzulegende Stränge benötigt werden, wogegen andere Erhebungen 1' bzw. 1'a ohne Stegverbindungen bleiben können.

Sofern auf Grund der Materialwahl und/oder Formgebung zu wenig Elastizität erhältlich ist, um die Stränge 5 mit Sicherheit festzuklemmen, können auch entsprechende Klemmkörper 7 in entsprechend breitere Ausnehmungen 4b (Fig. 8) eingesetzt werden. Verschiedene Ausführungsformen solcher Klemmkörper sind in den Fig. 8A bis 8D gezeigt, aber auch an Hand der Fig. 10C und 11C ersichtlich. Damit solche Klemmkörper 7 in den Halteöffnungen 4 unverrrutschbar sitzen, können sie an wenigstens einer Seite mit Haftflügeln 14 versehen sein, wie im Falle der Klemme 7c (Fig. 8C) oder mit in die jeweilige Ausnehmung 4" einbeissenden Vorsprüngen oder Stacheln 15 (Fig. 8A). Es sei jedoch darauf hingewiesen, dass die Flügel 14 im Falle der Fig. 8C eine gewisse Versteifungswirkung ausüben, die die Elastizität des Klemmkörpers beeinträchtigen mag. Eine solche Versteifungswirkung ergibt sich, wenn auch in geringerem Masse, bei in Längsrichtung verlaufenden Rippen 16 bzw. 16a gemäss Fig. 8B, doch kann das Versteifungsproblem dadurch gelöst werden, dass der Klemmkörper 7b zweiteilig ausgebildet ist, und einen äusseren Teil 17 mit den Rippen 16, 16a besitzt, der einen inneren Teil 18 umschliesst. Dieser Innenteil 18 mag dann mit dem Aussenteil 17 über die Rippen 16a am Grunde verbunden sein, wo diese Verbindung der Elastizität weiter nicht abträglich ist, wogegen die oberen Rippen 16 nur abstützend wirken.

Aus Fig. 8B ist auch ersichtlich, dass der Klemmkörper
7b ohne weiteres zur Aufnahme zweier Stränge 5 mit einem
dazwischenliegenden Abstand ausgebildet sein kann,
wobei der Abstand den vorher erwähnten 3 bis 8 mm
entsprechen kann, gewünschtenfalls auch etwas mehr.

Der Klemmkörper 7a nach Fig. 8A wird unter anderem auch
dadurch in seiner Halteöffnung 4" gehalten, dass diese
nicht U-förmig, sondern hinterschnitten ist, d.h. also
Kreisform besitzt mit einem abgeschnittenen Segment.
In dieser Kreisform kann der Klemmkörper elastisch
federnd eingesetzt werden. Selbstverständlich mag eine
derart hinterschnittene Form der Halteöffnung 4" auch
ohne Verwendung eines Klemmkörpers 7a günstig sein. Da
durch die Rippen 16 hier ein gewisser Abstand zum Strang
5 gesichert ist, so dass dieser gewünschtenfalls mit
Betonestrich ummantelt werden kann, mag es wiederum von
Vorteil sein, die Wärme aus dem unteren Bereich der
Ausnehmungen 4" durch einen Wärmeleitlack 10 an die
Oberfläche zu bringen.

Als Abstandhalter müssen aber nicht notwendiger Weise
Rippen 16 (Fig. 8A, 8B) bzw. 16a (Fig. 8B) vorgesehen
sein, sondern es können auch mehr oder minder punktförmige Auflagen durch entsprechende Vorsprünge erzielt
werden. Ein Beispiel für solche Vorsprünge 19 ist aus
Fig. 8C ersichtlich, wobei es denkbar ist, dass diese
als gesonderte Teile geformt und anschliessend über
Stift-und-Loch-Verbindungen (vgl. die Löcher 20) in die
Klemmkörper 7c eingesetzt werden, um so allzu komplizierte Formen zur Herstellung der Klemmkörper 7c zu vermeiden. Dabei ist es auch denkbar, bei Anordnung zweier Stränge übereinander zur Trennung derselben in die obersten Löcher 20 einen elastischen verformbaren Steg, besser noch zwei weiter vorspringende Stifte od.dgl. (um die Elastizität des Klemmkörpers 7c nicht zu beeinträchtigen) einzusetzen.

Klemmkörper können auch in der aus Fig. 8D ersichtlichen Weise aus einem Wärmeleitblech 7d gebildet sein, wobei sich der Vorteil ergibt, dass diese einerseits leicht herstellbar sind, auch mit entsprechenden Sicken 21 versehen werden können, eine natürliche Formelastizität besitzen und überdies auch eine Beschichtung mit Wärmeleitlack entbehrlich machen.

Eine weitere Ausbildung annähernd sternförmiger Erhebungen ist aus Fig. 9 ersichtlich. Dabei sind die Ausführungen etwas modifiziert. Die Erhebung 1'b ist kuppenförmig mit deutlich angesetzten Stegen 2, die eine bis zur Oberfläche der Basisplatte 9 reichende, breite Ausnehmung 4 zur Aufnahme von Klemmkörpern 7 aufweisen. Im Falle der Erhebung 1'c dagegen sind die Uebergänge von der Kuppe zu den Stegen 2 fliessend. Bei der Erhebung 1'd ist die Oberseite abgeflacht und verläuft in gleicher Höhe mit dem oberen Rande 3 der Stege 2, so dass diese einen Teil der Fussbodenbelastung mit aufnehmen können. Es kann aber auch für geringere Lasten erwünscht sein, die Oberseite 3" abzurunden, wie dies an Hand des Steges 2c gezeigt ist, um so die Isolierwirkung des Materials der Stege nach oben zu so gering wie möglich zu halten; dies kann jedoch bei den Stegen der Erhebungen 1'd durch Anbringen einer entsprechenden Beschichtung mit Wärmeleitlack erreicht werden. Je nach der zu übertragenden Wärme (oder Kälte) wird die Stärke der Beschichtung etwa 0.1 bis 0,5 mm betragen.

Um die Vorteile hoher Belastbarkeit mit denen einer guten Wärmeleitung zu verbinden, kann mit der besprochenen Isolierplattenanordnung 1, 2, 9 auch eine Gitterkonstruktion, beispielsweise in Form eines herkömmlichen Baustahlgitters kombiniert werden. Fig. 10 zeigt zwei Basisplatten 9, 9a nebeneinander, von denen die Platte 9 Erhebungen 1'e, aufweist, die gemäss dem Schnitt der Fig. 10A kreuzweise verlaufende Einschnitte 22 zur Aufnahme der überkreuzten Gitterstäbe 23 aufweist.

Der Abschnitt 2c des einen Gitterstabes kann entsprechend Fig. 10A derart gebogen werden, dass sich eine Halteöffnung 4c ergibt, die zweckmässig den Strang 5 ähnlich wie der Klemmkörper 7a der Fig. 8A über mehr als 180 $^{\circ}$ umschlingt und so eine feste Halterung gewährleistet, insbesondere, wenn der Krümmungsradius des Gitterstabes 23 geringfügig kleiner als der Radius des Stranges 5 ist. Auf diese Weise ergeben sich besonders schmale, von den Gitterstäben 23 gebildete Stegabschnitte 2c, die nicht nur eine erhöhte Festigkeit bewirken, sondern zusätzlich auch ein allseitiges Umspülen der wärmeführenden Flächen mit Luft bzw. eine allseitige Ummantelung mit Betonestrich ermöglichen. Wenn dabei von wärmeführenden Flächen die Rede ist, so soll

0154325

nicht übersehen werden, dass die Gitterstäbe 23 selbst für eine Abfuhr und Verteilung der Wärme vom Strang 5 sorgen, weshalb die Verwendung eines Wärmeleitlackes im Bereiche der Halteöffnung 4c sich hier besonders empfiehlt um den Wärmeübergang vom Strang 5 auf die Gitterstäbe 23 zu verbessern. Selbstverständlich können zu diesem Zwecke auch andere Massnahmen gesetzt werden, z.B. kann der Gitterstab 23 im Bereich der Halteöffnung 4c in eine Umfangssicke eines Wärmeleitbleches gesteckt werden.

Da Baustahlgitter und ähnliche Gitterkombinationen, besonders im Hinblick auf allfällig einzubringende Krümmungen für die Halteöffnungen 4c keine besonders genauen Toleranzmasse besitzen, kann es schwierig sein, das Gitter 23 genau in die Schlitze 22 einzubringen, wenn die Teilung nicht entsprechend übereinstimmt. Zwar ist es auch denkbar, das Gitter in die Täler zwischen die Erhebungen 1'e zu legen, doch wirkt sich auch hier bei grösseren Flächen ein Teilungsfehler aus. Aus diesem Grunde ist es gerade im Zusammenhang mit einem Gitter 23 von Vorteil, wenn die Erhebungen nicht an die Basisplatte angeformt sind, sondern erst nachträglich aufgesteckt werden.

Eine solche Konstruktion ist an Hand der Basisplatte 9a und Fig. 10B gezeigt. Dabei ist es sogar möglich, die Erhebungen 1'f direkt an den Kreuzungspunkten des Gitters 23 anzuformen. In beiden Fällen der Fig. 10 besitzt dann die jeweilige Erhebung 1'e, 1'f einen Raum zur Aufnahme der Gitterstäbe 23, welcher Raum im einen Fall von den Schlitzen 22 gebildet ist, im anderen Falle von jenem Volumen, das der Gitterstab beim Durchsetzen der Erhebung 1'f in dieser einnimmt. In diesem Zusammenhange sei nochmals betont, dass es zwar möglich ist, die Gitterstäbe 23 in die Täler zwischen den Erhebungen einzulegen, dass sich aber durch die Verbindung der Stegabschnitte 2c mit den Erhebungen eine grössere Stablität ergibt.

Die so vorgefertigten Erhebungen 1'f können dann mit Hilfe von Nägeln oder Schrauben bzw. anderen Befestigungseinrichtungen an der jeweiligen Basisplatte 9a befestigt werden, wobei so die Toleranzprobleme behoben sind. Bei der Ausführung nach Fig.10B sind Befestigungsnägel 24 in die Erhebungen 1'f eingegossen. Es versteht sich, dass eine getrennte Anfertigung der Erhebungen und der Basisplatten auch für eine der vorher besprochenen Ausführungen erwünscht sein kann. Dabei können auch Schnappverbindungen in regelmässigen Abständen in der Basisplatte vorgesehen werden, die in Rastausnehmungen von aus den Erhebungen vorragenden Stiften eingreifen oder die Erhebungen besitzen entsprechende Dübellöcher zur Aufnahme von aus der Basisplatte aufragenden Stiften. Da die Befestigung nicht besonders drehfest sein muss, weil sich eine Drehsicherung durch die Stege bzw. das Gitter von selbst ergibt und überdies diesbezüglich keine Beanspruchungen auftreten, sind die Anforderungen an die Befestigung 24 der Erhebungen gering.

Fig. 10B zeigt auch die Verwendung eines in seiner Ausgestaltung der Fig. 8B ähnlichen Klemmkörpers 7e, der in Fig. 10C in grösserem Massstabe dargestellt ist. Unterschiedlich gegenüber Fig. 8B ist dabei vor allem, dass für eine sichere Verbindung eine Umfangsnut oder **Sicke 25** vorgesehen ist, in die der gekrümmte Gitterstab im Bereiche der Halteöffnung 4 eingesetzt wird. Gewünschtenfalls wird hier eine Konstruktion aus Blech gewählt, um die Wärme vom Strang 5 auf den Gitterstab 23 besser zu übertragen. Der Klemmkörper kann an der Innenseite seiner Schenkel mit gegeneinander versetzten Rippen 26 versehen sein, die sich in der Oberfläche des Stranges 5 festkrallen.

Obwohl, wie erwähnt, die Anordnung des Gitters 23 in Verbindung mit den Erhebungen nach Art der Fig. 10 bevorzugt ist und auch unabhängig von der Ausbildung von Halteöffnungen für den Strang 5 (also bei lediglich daraufgelegtem Strang) Vorteile bietet, sind auch Lösungen denkbar, bei denen Stege nach Art der vorher besprochenen Figuren vorgesehen sind, die zusätzliche Halteöffnungen für die Gitterstäbe 23 aufweisen, so dass die Verbindung der Gitterkonstruktion über die Stege erfolgt. Auch können zur Halterung der Gitterstäbe 23 an den Stegen Klemmkörper aufsteckbar sein. In jedem Falle ergibt sich aber eine feste Verbindung mit den noppenartigen Erhebungen.

Fig. 11 zeigt eine Variante zu Fig. 1o, bei der das Gitter 23 die Erhebungen 1'g an deren Unterseite durchquert und mithin an der Oberseite der Basisplatte 9b geführt ist. Hiebei müssen die Erhebungen 1'g an der Unterseite mit Schlitzen 22' versehen sein und besitzen beispielsweise die in Fig. 11 angedeuteten Steckverbindungen 24' in einem aussermittigen Bereich. Die Basisplatten 9b können beispielsweise aus Schlackenwolle bestehen, so dass sie dem Aufstecken der Erhebungen nicht einen übermässigen Widerstand entgegensetzen.

Für das an der Oberseite der Basisplatten 9b geführte Gitter gibt es zwei Möglichkeiten zur Bildung entsprechender Halteöffnungen für den Steg 5. Entweder das Gitter 23 wird nach dem Austritt aus dem Schlitz 22' in die Höhe gebogen (Fig. 11A) um dann eine Aufnahmekrümmung 4c zu bilden, um entweder unmittelbar oder über die Klammer 7e den Strang 5 zu umfassen, oder es wird gemäss den Fig. 11B und 11C ein besonderer Klemmkörper 7f verwendet, der auf das flach an der Oberfläche der Basisplatte 9b liegende Gitter nur aufgesteckt wird. Damit kann nämlich dann jede Bearbeitung des Gitters 23 entfallen.

Der Klemmkörper 7f ist im wesentlichen ebenso annähernd U-förmig ausgebildet, wie dies vorher bereits beschrieben wurde. Um aber auf die Gitterstäbe 23 aufgesteckt werden zu können, besitzt er an seiner Unterseite eine Schnappklemme 27. Mit dieser Schnappklemme 27 ergibt sich allerdings eine Schwenkmöglichkeit um den Gitterstab 23 als Drehpunkt. Diese Schwenkmöglichkeit sollte zweckmässig begrenzt bleiben, aus welchem Grunde Füsschen 28 vorgesehen sind, die beim Schwenken um den Gitterstab 23 als Anschlag gegen die Basisplatte 9b hin wirken.

Bei Verwendung eines Gitters 23 ergeben sich aber auch noch andere Möglichkeiten, die nun an Hand der Fig. 12 und 13 beschrieben werden sollen. Die Erhebungen, von denen Fig. 12 zwei verschiedene Ausführungen zeigt, können auch auf die Kreuzungspunkte der Gitterstäbe 23 aufgegossen sein, so dass das Gitter 23 entlang der Oberfläche der Basisplatte 9a geführt ist. Um dabei ein Ausbrechen der Ränder nicht zu begünstigen, ist es vorteilhaft, wenn die Erhebungen 1 nicht in einem spitzen Winkel gegen die Oberfläche der Basisplatte 9a auslaufen, sondern die das Gitter 23 aufnehmenden Seitenwände etwa in einem rechten Winkel zur Oberfläche der Platte 9a stehen, wie dies bei der sternförmigen Erhebung an der Seitenwand 29 gezeigt ist; bei in Draufsicht kreisrunden Erhebungen krönt, wie schon beschrieben, die Kuppe 3' einen unteren Zylinderteil 30.

Ferner bietet das Gitter 23 noch verschiedene weitere Möglichkeiten zur Bildung der Halteöffnungen. Es können dies vom Gitterstab abstehende Daumen 4d, 4e sein, von denen jeweils benachbarte in entgegengesetzte Richtung gewendet sind, um den Strang 5 leicht gewunden dazwischen zu führen. Die Anbringung von Krallen 4f hat den Vorteil, dass der Strang 5' nicht nur in der dargestellten hin- und hergewundenen Form angebracht sein kann, sondern auch zwei nebeneinander laufende Stränge in die die Halteöffnungen bildenden Krallen 4f gesteckt werden können. Ueberdies bilden im Falle der Daumen 4d, 4e diese beiden gemeinsam eigentlich die Halteöffnung, weshalb die Klemmwirkung erst bei genügender Steifigkeit oder bei Zugbeanspruchung des Stranges 5 erzielt wird. Sind aber die Stränge 5, 5' genügend biegsam bzw. biegbar, so können Kreuzungen in der gezeigten Weise durch entsprechendes Biegen wenigstens eines der Stränge 5, 5' geschaffen werden.

Die Verbindung der Daumen 4d und 4e bzw. der Krallen 4f mit dem Gitter 23 ist so vorzunehmen, dass die Festigkeit des Gitters nicht beeinträchtigt wird. Dies kann entweder so erfolgen. dass Daumen oder Kralle als separate Teile durch gemeinsames Umwinden des Daumens bzw. der Kralle mit dem Gitterstab 23 mittels dünnen Drahtes befestigt werden oder durch Hartlöten. Bei Schweissverbindungen ist jedoch darauf zu achten, dass der Gitterstab nicht infolge zu hoher Temperatur versprödet. Ebenso ist es möglich, eine Verbindung durch Kleben, beispielsweise mit Epoxiharz, herzustellen.

Ir Falle eines in die Täler zwischen die Erhebungen 1 gelegten Gitters 23 (Fig. 13) kommen die Kreuzungspunkte des Gitters 23 an die Oberfläche der Basisplatte 9b zu liegen. In diesem Falle können besondere Klemmkörper 7g auf diese Kreuzungspunkte aufgesteckt werden, die seitliche Halteöffnungen 4g aufweisen. Auch hier mag der Heizstrang 5 entweder gewunden zwischen einer linken und rechten Halteöffnung eingelegt werden, oder es sind zwei zueinander parallele Stränge 5 vorgesehen, von denen der eine die linken, der andere die rechten Halteöffnungen des Klemmkörpers 7g durchläuft. Selbstverständlich sind dann diese Oeffnungen 4g zweckmässig etwas hinterschnitten bzw. federnd auszubilden, damit ein sicherer Halt gewährleistet ist. Für die Anwendung nach Fig. 13 mag sich eine runde Noppenform empfehlen, weil dann selbst bei enger Anordnung der Noppen 1 genügend Platz für die Kreuzungspunkte des Gitters 23 mit den Klemmkörpern 7g bleibt. Wegen möglicher Teilungsfehler oder unterschiedlicher Gitterteilung ist wiederum das Aufstecken der Erhebungen 1 mittels einer Befestigungseinrichtung 24 günstig.

Im Rahmen der Erfindung sind zahlreiche verschiedene Abwandlungen und Kombinationen der gezeigten Ausführungen möglich; so könnten im Falle der Fig. 11 die Befestigungsstifte 24' durch eine Klipsverbindung der Erhebungen 1'g mit dem Kreuzungspunkt des darunter gelegenen Gitters ersetzt werden; da das Gitter 23 verhältnismässig schwer ist, wird so eine genügend stabile Verbindung mit der Befestigung 9b geschaffen. Dabei können die aufsteckbaren Erhebungen auch aus hohlem Kunststoff bestehen. Ferner ist es möglich, die Halteöffnungen 4 dadurch zu bilden, dass der jeweilige Steg in der Art der Fig. 7B unterbrochen ist und an der Stelle der Unterbrechung aus der Basisplatte 9 ein mit einem Fussteil eingeschäumter Klemmkörper ragt. Weiters können die Erhebungen an sich beliebige Form besitzen, obwohl aus den erwähnten Gründen die Sternform bevorzugt ist. So sind grobe Waben- (hexagonal) oder Waffelprofile denkbar.

Unter Bezugnahme besonders auf Fig. 7D sei darauf hingewiesen, dass die Stege 2a wenigstens die halbe Höhe der Erhebungen 1'a erreichen sollen, einerseits, um einen genügend tiefen Ausschnitt 4 zur Aufnahme des Stranges 5 zu bilden, obwohl hiefür auch eine leichte Nutenbildung in der Oberfläche der Basisplatte 9 an Bauhöhe sparen kann; anderseits soll das Verhältnis von 1 : 2 schon deshalb gewahrt werden, weil eine Vergrösserung der Höhe der Erhebungen gegenüber der Höhe der Stege die Gesamtbauhöhe vergrössert, was zu Platzproblemen führen kann.

Eine weitere Modifikation kann darin bestehen, dass beispielsweise die Ausnehmungen 4' der Fig. 2C oder 2D mit Abstandhalterippen oder Stiften in der Art der Rippen 16, 16a der Fig. 8B oder der Stifte 19 der Fig. 8C versehen sind.

27.02.1985                                    P-0569-EU


P A T E N T A N S P R U E C H E


1. Isolierplatte für die Verlegung eines Stranges einer
   Flächen-Temperiereinrichtung, mit noppenartigen Erhebungen, zwischen denen der Strang verlaufen soll, dadurch gekennzeichnet, dass von wenigstens einem Teil
   der Erhebungen (1) je zwei mittels verschmälerter
   Strangaufnahmen (2) verbunden sind, die in mindestens
   der halben Höhe verlaufen wie die Erhebungen (1), und
   dass an der Oberseite (3) der Strangaufnahmen (2) wenigstens eine Halteöffnung (4) für die Aufnahme wenigstens eines Stranges (5) gebildet ist.


2. Platte nach Anspruch 1, dadurch gekennzeichnet, dass
   die Strangaufnahmen (2) von zwischen den Erhebungen
   (1) verlaufenden, gegebenenfalls in Schlitze (12) der
   Erhebungen (1) einsetzbaren, Stegen (2) gebildet
   sind.


3. Platte nach Anspruch 1, dadurch gekennzeichnet, dass
   die Erhebungen (1) - senkrecht auf die Fläche gesehen
   - Polygon- oder Sternform aufweisen, wobei jede Ecke,
   bzw. jeder Strahl in einen Steg (2) ausfläuft (Fig.
   4,9,12).


4. Platte nach einem der vorhergehenden Ansprüche, dadurch gekennzeichnet, dass die Erhebungen (1) im Querschnitt gesehen kuppenartig abgerundet und nur von
   Fuss zu Fuss (6) durch Strangaufnahmen (2) verbunden
   sind, die vorzugsweise ebenfalls - im Längsschnitt gesehen - kuppenartig abgerundet sind (Fig. 2B).


5. Platte nach einem der vorhergehenden Ansprüche, dadurch gekennzeichnet, dass die Höhe der Strangaufnahmen (2) um mindestens 20% grösser als der Durchmesser
des Stranges (5), höchstens aber 8 mm grösser als der
doppelte Strangdurchmesser ist.

6. Platte nach einem der vorhergehenden Ansprüche, dadurch gekennzeichnet, dass die Halteöffnungen (4) geringfügig enger als der Durchmesser des Stranges (5)
und/oder hinterschnitten sind.

7. Platte nach einem der vorhergehenden Ansprüche, dadurch gekennzeichnet, dass die Halteöffnungen (4) mit
Klemmkörpern (7), insbesondere aus Kunststoff, ausgekleidet sind (Fig. 8-11,13).

8. Platte nach einem der vorhergehenden Ansprüche, dadurch gekennzeichnet, dass Abstandhalter (16,16a,19)
zum Führen des Stranges (5) im Abstand von der inneren
Oberfläche der Halteöffnungen (4) vorgesehen sind.

9. Platte nach einem der vorhergehenden Ansprüche, dadurch gekennzeichnet, dass die zum Raum weisende Oberfläche der Platte (9) und der Erhebungen (1), zweckmässig auch diejenige der Strangaufnahmen (2), einschliesslich der verbindenden Seitenwände wenigstens
teilweise von einem - vorzugsweise 0,1 bis 1,0 mm
starken - Wärmeleitlack bzw. -blech (10) bedeckt

sind.

10. Platte nach Anspruch 9, dadurch gekennzeichnet, dass
    Streifen (10) aus Wärmeleitblech gitterartig über die
    Erhebungen (1) laufen und zwischen diesen jeweils eine
    Nut (4) zur Aufnahme des Stranges (5) bilden.

11. Platte nach einem der vorhergehenden Ansprüche, dadurch gekennzeichnet, dass die Erhebungen (1'f;1'g)
    und/oder die Strangaufnahmen (2) als von der Basisplatte (9b), getrennte, auf diese aufsetzbare Teile
    ausgebildet sind, die vorzugsweise an ihrer Ober-
    und/oder Unterseite Schlitze (22,22') für die Aufnahme
    von Verstärkungselementen (23) aufweisen (Fig.10,11).

Fig. 1

Fig. 2A

Fig. 2B

Fig. 3

0154325

Fig.2C

Fig.2D

Fig.2E

Fig.2F

Fig. 4

Fig. 5

Fig. 6

Fig. 7A

Fig. 7B

Fig. 7C

Fig. 7D

Fig.8

Fig.8A

Fig. 8 B

Fig. 8 C

Fig. 8 D

Fig.9

Fig.10

Fig.10 A

Fig.10 B

Fig.10 C

**Fig. 11**

**Fig. 11 A**

**Fig. 11 B**

**Fig. 11 C**

0154325

Fig. 12

Fig. 13